# EUROPÄISCHE PATENTSCHRIFT

(11) **EP 3 046 944 B1**
(45) Veröffentlichungstag und Bekanntmachung des Hinweises auf die Patenterteilung: **11.08.2021**
(21) Anmeldenummer: 14758983.2
(22) Anmeldetag: 05.09.2014
(51) Int. Cl.: C08G 18/38, C08J 9/28, C08G 18/22, C08G 18/32, C08G 18/76, C08G 18/30

(54) **VERFAHREN ZUR HERSTELLUNG VON ORGANISCHEN AEROGELEN AUF BASIS VON ISOCYANAT**
METHOD FOR THE PREPARATION OF ORGANIC AEROGELS BASED ON ISOCYANATE
PROCÉDÉ DE FABRICATION D'AÉROGELS ORGANIQUES À BASE D'ISOCYANATE

(30) Priorität: 16.09.2013 EP 13184480
(43) Veröffentlichungstag der Anmeldung: 27.07.2016
(73) Patentinhaber: BASF SE, 67056 Ludwigshafen am Rhein (DE)
(72) Erfinder: FRICKE, Marc, 49090 Osnabrück (DE); WEINRICH, Dirk, 49078 Osnabrück (DE)
(74) Vertreter: BASF IP Association
(86) Internationale Anmeldenummer: PCT/EP2014/068949
(87) Internationale Veröffentlichungsnummer: WO 2015/036327

(56) Entgegenhaltungen:
- WO-A1-2012/059388
- WO-A1-2012/113759
- None

## Beschreibung

Die vorliegende Erfindung betrifft ein Verfahren zur Herstellung von Aerogelen umfassend die Umsetzung mindestens eines mehrfunktionellen Isocyanates mit mindestens einem mehrfunktionellen aromatischen Amin in Gegenwart von mindestens einem Carboxylat als Katalysator und einem Lösungsmittel. Weiterhin betrifft die Erfindung die so erhältlichen Aerogele sowie die Verwendung der Aerogele als Dämmstoff, insbesondere für Anwendungen im Baubereich und in Vakuumisolationspaneelen.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmedämmstoffe.

Solche porösen Materialien mit kleinem mittlerem Porendurchmesser können beispielsweise als organische Aerogele oder Xerogele vorliegen, die mit einem Sol-Gel-Verfahren und anschließender Trocknung hergestellt werden. Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Aerogel, zu erhalten, muss die Flüssigkeit entfernt werden. Dieser Schritt wird nachfolgend vereinfachend als Trocknung bezeichnet.

Die WO 2012/000917 und die WO 2012/059388 beschreiben poröse Materialien auf Basis von mehrfunktionellen Isocyanaten und mehrfunktionellen aromatischen Aminen, wobei die Aminkomponente mehrfunktionelle substituierte aromatische Amine umfasst. Die Herstellung der genannten porösen Materialien erfolgt durch Umsetzung von Isocyanaten mit der gewünschten Menge Amin in Anwesenheit eines Katalysators in einem Lösungsmittel, das gegenüber den Isocyanaten nicht reaktiv ist.

Die Materialeigenschaften, insbesondere die Wärmeleitfähigkeit, der bekannten organischen porösen Materialien sind jedoch nicht für alle Anwendungen ausreichend. Insbesondere sind die thermischen Leitfähigkeiten im belüfteten Zustand noch nicht ausreichend niedrig. Der belüftete Zustand kennzeichnet bei offenzelligen Materialien den Zustand unter Umgebungsdruck mit Luft, wohingegen dieser Zustand bei teilweise oder ganz geschlossenzelligen Materialien wie Polyurethan-Hartschaumstoffen erst nach einer Alterung erreicht wird, nachdem das Zellgas nach und nach vollständig ausgetauscht wurde.

Ein besonderes Problem bei den aus dem Stand der Technik bekannten Formulierungen auf Basis von Isocyanaten und Aminen sind so genannte Mischfehler. Mischfehler treten infolge der hohen Reaktionsgeschwindigkeit zwischen Isocyanaten und Aminogruppen auf, da vor einer vollständigen Durchmischung die Gelierungsreaktion bereits weit fortgeschritten ist. Mischfehler führen zu porösen Materialien mit heterogenen und unzureichenden Materialeigenschaften. Ein Konzept zur Verringerung des Phänomens der Mischfehler ist somit allgemein wünschenswert. Es bestand daher die Aufgabe, die vorgenannten Nachteile zu vermeiden. Insbesondere sollte ein poröses Material zur Verfügung gestellt werden, das die vorgenannten Nachteile nicht oder in geringerem Maße aufweist. Die porösen Materialien sollten eine im Vergleich zum Stand der Technik verbesserte Wärmeleitfähigkeit bei niedrigen Drücken aufweisen. Insbesondere sollten die porösen Materialien jedoch im belüfteten Zustand, d. h. bei Umgebungsdruck, eine möglichst geringe thermische Leitfähigkeit aufweisen. Weiterhin sollte das poröse Material gleichzeitig eine hohe Porosität, eine geringe Dichte und eine ausreichend hohe mechanische Stabilität aufweisen.

Schließlich sollten Mischfehler und somit die Heterogenitäten in der Materialstruktur und den Materialeigenschaften in den porösen Materialien, welche bei der Umsetzung der Isocyanate mit den Aminen entstehen, vermieden werden.

Demgemäß wurden das erfindungsgemäße Verfahren und die so erhältlichen Aerogele gefunden.

Das erfindungsgemäße Verfahren zur Herstellung eines porösen Materials umfasst die Umsetzung der folgenden Komponenten:
(a1) mindestens ein mehrfunktionelles Isocyanat,
(a2) von 5 bis 20 Gew.-% mindestens eines mehrfunktionellen aromatischen Amins gemäß der allgemeinen Formel I 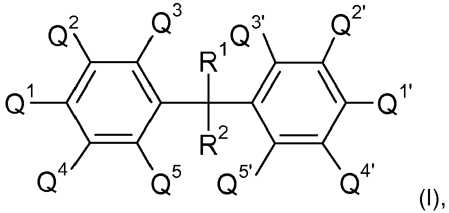 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
   - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, und
   - Q², Q⁴, Q^{2'} und Q^{4'} so gewählt werden, dass das aromatische Amin gemäß der allgemeinen Formel I mindestens eine lineare oder verzweigte Alkylgruppe mit von 1 bis 12 Kohlenstoffatomen, die optional weitere funktionelle Gruppen tragen kann, in α-Position zu mindestens einer an den aromatischen Kern gebundenen primären Aminogruppe aufweist,
(a3) von 0 bis 15 Gew.-% Wasser, und
(a4) von 1 bis 4,9 Gew.-% mindestens eines Carboxylats als Katalysator, jeweils bezogen auf das Gesamtgewicht der Komponenten (a1) bis (a4), wobei sich die Gew.-% der Komponenten (a1) bis (a4) auf 100 Gew.-% addieren und die zu 100 Gew.-% fehlende Summe der Gewichtsanteile der Komponenten (a2) bis (a4) dem Anteil von Komponente (a1) entspricht, und wobei die Umsetzung in Gegenwart eines Lösungsmittels (C) durchgeführt wird, welches nach der Umsetzung unter überkritischen Bedingungen entfernt wird, wobei bei der Umsetzung ein Gel erhalten wird, das anschließend getrocknet wird.

Bevorzugte Ausführungsformen sind den Ansprüchen und der Beschreibung zu entnehmen. Kombinationen bevorzugter Ausführungsformen verlassen den Rahmen dieser Erfindung nicht. Nachfolgend werden bevorzugte Ausführungsformen der eingesetzten Komponenten erläutert. Die mehrfunktionellen Isocyanate (a1) werden im Folgenden gemeinsam als Komponente (a1) bezeichnet. Entsprechend werden die mehrfunktionellen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

Unter Aerogel wird ein poröses Material verstanden, welches durch ein Sol-Gel-Verfahren hergestellt wurde, wobei die flüssige Phase unter überkritischen Bedingungen aus dem Gel entfernt wurde.

### Komponente (a1)

Im erfindungsgemäßen Verfahren wird als Komponente (a1) mindestens ein mehrfunktionelles Isocyanat umgesetzt.

Vorzugsweise beträgt die eingesetzte Menge der Komponente (a1) mindestens 65 Gew.-%, insbesondere mindestens 70 Gew.-%, besonders bevorzugt mindestens 75 Gew.-%. Vorzugsweise beträgt die eingesetzte Menge der Komponente (a1) höchstens 94 Gew.-%, insbesondere höchstens 90 Gew.-%, besonders bevorzugt höchstens 89 Gew.-%, insbesondere höchstens 85 Gew.-%, jeweils bezogen auf das Gesamtgewicht der Komponenten (a1) bis (a4).

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im Folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-lsocyanato-3,3,5-trimethyl-5-iso-cyanatomethyl-cyclohexan (Isophoron-diisocyanat, IPDI), 1,4- und/oder 1,3-Bis(iso-cyanatomethyl)cyclohexan (HXDI), 1,4-Cyclohexandiisocyanat, 1-Methyl-2,4- und/oder-2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im Folgenden oligomeres MDI genannt) handelt es sich um ein oligomeres Kondensationsprodukt von Diphenylmethandiisocyanat (MDI) oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,2 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das so genannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,5 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Erfindungsgemäß wird im Rahmen von Komponente (a2) von 5 bis 20 Gew.-% (bezogen auf die Gewichtsmenge der Komponenten a1 bis a4) mindestens eines mehrfunktionellen substituierten aromatischen Amins (a2) gemäß der allgemeinen Formel I 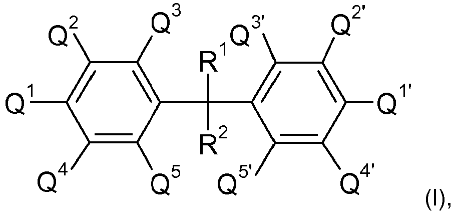 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, und
- Q², Q⁴, Q^{2'} und Q^{4'} so gewählt werden, dass das aromatische Amin gemäß der allgemeinen Formel I mindestens eine lineare oder verzweigte Alkylgruppe mit von 1 bis 12 Kohlenstoffatomen, die optional weitere funktionelle Gruppen tragen kann, in α-Position zu mindestens einer an den aromatischen Kern gebundenen primären Aminogruppe aufweist,
in Gegenwart eines Lösungsmittels (C) umgesetzt.

Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Vorzugsweise beträgt die eingesetzte Menge der Komponente (a2) mindestens 6 Gew.-%, insbesondere mindestens 7 Gew.-%, besonders bevorzugt mindestens 8 Gew.-%, insbesondere mindestens 10 Gew.-%. Vorzugsweise beträgt die eingesetzte Menge der Komponente (a2) höchstens 19 Gew.-%, besonders bevorzugt höchstens 18 Gew.-%, jeweils bezogen auf das Gesamtgewicht der Komponenten (a1) bis (a4).

Demgemäß betrifft die vorliegende Erfindung gemäß einer weiteren Ausführungsform ein Verfahren wie zuvor beschrieben, wobei mindestens 10 und höchstens 20 Gew.-% der Komponente (a2) bezogen auf das Gesamtgewicht der Komponenten (a1) bis (a4) eingesetzt wird.

Gemäß einer weiteren Ausführungsform betrifft die vorliegende Erfindung ein Verfahren wie zuvor beschrieben, wobei mindestens 12 und höchstens 18 Gew.-% der Komponente (a2) bezogen auf das Gesamtgewicht der Komponenten (a1) bis (a4) eingesetzt wird. Erfindungsgemäß sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogruppen und/oder Hydroxygruppen und/oder Halogenatome als solche funktionelle Gruppen bevorzugt.

Die durch die vorgenannten Alkylgruppen in α-Position hervorgerufene verringerte Reaktivität führt in Kombination mit der unten näher ausgeführten Komponente (a4) zu besonders stabilen Gelen mit besonders guten Wärmeleitfähigkeiten im belüfteten Zustand.

Vorzugsweise werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl.

Vorzugsweise werden die Amine der Komponente (a2) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

Demgemäß betrifft die vorliegende Erfindung gemäß einer weiteren Ausführungsform ein Verfahren wie zuvor beschrieben, wobei die Aminkomponente (a2) mindestens eine Verbindung umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.

Gemäß einer weiteren Ausführungsform betrifft die vorliegende Erfindung ein Verfahren wie zuvor beschrieben, wobei die Alkylgruppen der mehrfunktionellen aromatischen Amine (a2) gemäß der allgemeinen Formel I ausgewählt werden aus Methyl, Ethyl, n-Propyl, iso-Propyl, n-Butyl, sek-Butyl und tert-Butyl.

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3'-5,5'-Tetraethyl-4,4'-diaminodiphenylmethan und/oder 3,3'-5,5'-Tetramethyl-4,4'-diaminodiphenylmethan.

Demgemäß betrifft die vorliegende Erfindung gemäß einer weiteren Ausführungsform ein Verfahren wie zuvor beschrieben, wobei die mehrfunktionellen aromatischen Amine (a2) gemäß der allgemeinen Formel I 3,3',5,5'-Tetraalkyl-4,4'-diaminodiphenylmethane sind.

Gemäß einer weiteren Ausführungsform betrifft die vorliegende Erfindung ein Verfahren wie zuvor beschrieben, wobei die mehrfunktionellen aromatischen Amine (a2) gemäß der allgemeinen Formel I ausgewählt werden aus 3,3',5,5'-Tetraethyl-4,4'-diaminodiphenylmethan und/oder 3,3',5,5'- Tetramethyl-4,4'-diaminodiphenylmethan.

Die vorgenannten mehrfunktionellen Amine des Typs (a2) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse, insbesondere die Umsetzung von 2,4-oder 2,6-Dialkylanilin.

### Komponente (a3)

Komponente (a3) ist Wasser. Sofern Wasser eingesetzt wird, beträgt die bevorzugt eingesetzte Menge Wasser mindestens 0,01 Gew.-%, insbesondere mindestens 0,1 Gew.-%, besonders bevorzugt mindestens 0,5 Gew.-%, insbesondere mindestens 1 Gew.-%. Sofern Wasser eingesetzt wird, beträgt die bevorzugt eingesetzte Menge Wasser höchstens 15 Gew.-%, insbesondere höchstens 13 Gew.-%, besonders bevorzugt höchstens 11 Gew.-%, insbesondere höchstens 10 Gew.-%, ganz besonders bevorzugt höchstens 9 Gew.-%, insbesondere höchstens 8 Gew.-%, jeweils bezogen auf das Gesamtgewicht der Komponenten (a1) bis (a4), welches 100 Gew.-% ergibt.

Demgemäß betrifft die vorliegende Erfindung gemäß einer weiteren Ausführungsform ein Verfahren wie zuvor beschrieben, wobei kein Wasser verwendet wird.

Gemäß einer alternativen Ausführungsform betrifft die vorliegende Erfindung ein Verfahren wie zuvor beschrieben, wobei mindestens 0,1 Gew.-% Wasser zugegeben wird.

Aus dem Wassergehalt und dem Gehalt reaktiver Isocyanatgruppen der Komponente (a1) ergibt sich ein rechnerischer Gehalt an Aminogruppen, indem man von einer vollständigen Umsetzung des Wassers mit den Isocyanatgruppen der Komponente (a1) unter Bildung einer entsprechenden Menge Aminogruppen ausgeht und diesen Gehalt zum Gehalt resultierend aus Komponente (a2) addiert (insgesamt n^{Amin}). Das hieraus resultierende Einsatzverhältnis der rechnerisch verbleibenden NCO-Gruppen n^{NCO} im Verhältnis zu den rechnerisch gebildeten sowie eingesetzten Aminogruppen wird nachfolgend als rechnerisches Einsatz-Verhältnis n^{NCO}/n^{Amin} bezeichnet und ist ein Äquivalenzverhältnis, d. h. ein molares Verhältnis der jeweiligen funktionellen Gruppen.

Wasser reagiert mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt. Die Erzeugung von Aminen als Zwischenprodukt führt zu Aerogelen mit besonders hoher mechanischer Stabilität und geringer Wärmeleitfähigkeit. Das gebildete CO₂ darf die Gelierung jedoch nicht so stark stören, dass die Struktur des resultierenden porösen Materials in unerwünschter Weise beeinflusst wird. Hieraus ergeben sich die oben ausgeführten bevorzugten Obergrenzen für den Wassergehalt bezogen auf das Gesamtgewicht der Komponenten (a1) bis (a4).

Dabei beträgt das rechnerische Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer verbesserten Netzwerkstruktur und zu verbesserten Endeigenschaften des resultierenden Aerogels.

Die Komponenten (a1) bis (a4) werden nachfolgend gemeinsam als organische Gelvorstufe (A) bezeichnet. Es ist für den Fachmann offensichtlich, dass die teilweise Umsetzung der Komponente (a1) bis (a4) zu der eigentlichen Gelvorstufe (A) führt, welche anschließend zu einem Gel umgesetzt wird.

### Katalysator (a4)

Erfindungsgemäß werden als Katalysator von 1 bis 4,9 Gew.-% mindestens eines Carboxylats eingesetzt.

Bevorzugte Carboxylate weisen als Kation ein Alkali-, Erdalkali- oder Ammoniumion auf, d.h. sie sind entsprechende Salze von Carbonsäuren. Bevorzugte Carboxylate sind Formiate, Acetate, 2-Ethylhexanoate, Trifluoracetate, Adipate, Benzoate und gesättigte oder ungesättigte langkettige Fettsäuresalze mit von 10 bis 20 Kohlenstoffatomen, die gegebenenfalls an der Seitengruppe OH-Gruppen aufweisen.

Demgemäß betrifft die vorliegende Erfindung gemäß einer weiteren Ausführungsform ein Verfahren wie zuvor beschrieben, wobei Komponente (a4) ausgewählt wird aus der Gruppe bestehend aus Alkalimetallcarboxylaten, Erdalkalimetallcarboxylaten und Ammoniumcarboxylaten.

Bevorzugte Katalysatoren werden ausgewählt aus Kaliumformiat, Natriumacetat, Kaliumacetat, Cäsiumacetat, Kalium-2-ethylhexanoat, Kaliumtrifluoroacetat, Kaliumadipat, Natriumbenzoat, und Alkalimetallsalze von gesättigten oder ungesättigten langkettigen Fettsäuresalzen mit von 10 bis 20 Kohlenstoffatomen, die gegebenenfalls an der Seitengruppe OH-Gruppen aufweisen.

Vorzugsweise beträgt die eingesetzte Menge der Komponente (a4) von 1 bis 4,9 Gew.-%, insbesondere von 1,5 bis 4,8 Gew.-%, besonders bevorzugt von 2 bis 4,8 Gew.-%, ganz besonders bevorzugt von 2,5 bis 4,8 Gew.-%, jeweils bezogen auf das Gesamtgewicht der Komponenten (a1) bis (a4).

Besonders bevorzugt enthält Komponente (a4) Kalium-2-ethylhexanoat. Demgemäß betrifft die vorliegende Erfindung gemäß einer weiteren Ausführungsform ein Verfahren wie zuvor beschrieben, wobei Komponente (a4) Kalium-2-ethylhexanoat umfasst.

Gemäß der vorliegenden Erfindung findet die Umsetzung in Gegenwart eines Lösungsmittels (C) statt.

Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (a) flüssige Verbindung, vorzugsweise ein organisches Lösungsmittel.

Als Lösungsmittel (C) kommen prinzipiell eine organische Verbindung oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels (C) ist zunächst ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1) bis (a4) sind, d. h. solche, die die Bestandteile der Komponenten (a1) bis (a4) unter Reaktionsbedingungen weitgehend vollständig lösen. Bevorzugt ist das Lösungsmittel (C) gegenüber Komponente (a1) inert, d. h. nicht reaktiv.

Als Lösungsmittel (C) kommen beispielsweise Ketone, Aldehyde, Alkylalkanoate, Amide wie Formamid und N-Methylpyrollidon, Sulfoxide wie Dimethylsulfoxid, organische Carbonate, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Aldehyde und/oder Ketone sind als Lösungsmittel (C) besonders bevorzugt. Als Lösungsmittel (C) geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Ethylbutylketon, Methylisobutylketon, Methyl-n-pentylketon, Diisobutylketon, Methyl-n-butylketon, Ethylisopropylketon, 2-Acetylfuran, 5-Methyl-2-Acetylfuran, 2-Methoxy-4-methylpentan-2-on, Cyclopentanon, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel (C) bevorzugt. Besonders bevorzugt sind Methylethylketon und Diethylketon.

Als Lösungsmittel sind außerdem Alkylalkanoate bevorzugt, insbesondere Methylformiat, Methylacetat, Ethylformiat, Isopropylacetat, Butylacetat, Ethylacetat, Glycerintriacetat und Ethylacetoacetat. Bevorzugte halogenierte Lösungsmittel sind in der WO 00/24799, Seite 4, Zeile 12 bis Seite 5, Zeile 4 beschrieben.

Als Lösungsmittel sind außerdem organische Carbonate bevorzugt, insbesondere Dimethylcarbonat, Diethylcarbonat, Dipropylcarbonat, Diisopropylcarbonat, Dibutylcarbonat, Diisobutylcarbonat, Ethylencarbonat, Propylencarbonat, Butylencarbonat.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Um in Schritt (b) ein ausreichend stabiles Gel zu erhalten, das bei der Trocknung in Schritt (c) nicht stark schrumpft, darf der Anteil der Komponenten (a1) bis (a4) am Gesamtgewicht der Komponenten (a1) bis (a4) und dem Lösungsmittel (C), welches 100 Gew.-% ergibt, im Allgemeinen nicht weniger als 5 Gew.-% betragen. Bevorzugt beträgt der Anteil der Komponenten (a1) bis (a4) am Gesamtgewicht der Komponenten (a1) bis (a4) und dem Lösungsmittel (C), welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) bis (a4) in der bereitgestellten Mischung nicht zu hoch gewählt werden, da ansonsten kein poröses Material mit günstigen Eigenschaften erhalten wird. Im Allgemeinen beträgt der Anteil der Komponenten (a1) bis (a4) am Gesamtgewicht der Komponenten (a1) bis (a4) und dem Lösungsmittel (C), welches 100 Gew.-% ergibt, höchstens 40 Gew.-%. Bevorzugt beträgt der Anteil der Komponenten (a1) bis (a4) am Gesamtgewicht der Komponenten (a1) bis (a4) und dem Lösungsmittel (C), welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1) bis (a4) am Gesamtgewicht der Komponenten (a1) bis (a4) und des Lösungsmittels (L), welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu porösen Materialien mit besonders günstiger Porenstruktur, geringer Wärmeleitfähigkeit und geringer Schrumpfung bei der Trocknung.

Vor der Umsetzung ist es erforderlich, die eingesetzten Komponenten zu mischen, insbesondere homogen zu vermischen. Die Geschwindigkeit des Mischens sollte groß relativ zur Geschwindigkeit der Umsetzung sein, um Mischfehler zu vermeiden. Entsprechende Mischverfahren sind dem Fachmann an sich bekannt.

### Bevorzugtes Verfahren zur Herstellung der porösen Materialien

Im Rahmen einer bevorzugten Ausführungsform umfasst das erfindungsgemäße Verfahren zumindest folgende Schritte:
(a) Bereitstellen der Komponenten (a1) bis (a4) und des Lösungsmittels (C) wie oben erläutert,
(b) Umsetzung der Komponenten (a1) bis (a4) in Gegenwart des Lösungsmittels (C) zu einem Gel, und
(c) Trocknen des im vorigen Schritt erhaltenen Gels unter überkritischen Bedingungen.

Die vorliegende Erfindung betrifft gemäß einer weiteren Ausführungsform ein Verfahren wie zuvor beschrieben, umfassend:
(a) Bereitstellen der Komponenten (a1), (a2), (a4) und gegebenenfalls (a3) sowie des Lösungsmittels (C) wie zuvor definiert,
(b) Umsetzung der Komponenten (a1) bis (a4) in Gegenwart des Lösungsmittels (C) zu einem Gel, und
(c) Trocknen des im vorigen Schritt erhaltenen Gels unter überkritischen Bedingungen.

Bevorzugte Ausführungsformen der Schritte (a) bis (c) werden im Folgenden näher beschreiben.

### Schritt (a)

Erfindungsgemäß erfolgt in Schritt (a) das Bereitstellen der Komponenten (a1) bis (a4) und des Lösungsmittels (C).

Vorzugsweise werden die Komponenten (a1) einerseits und (a2) andererseits getrennt voneinander jeweils in einer geeigneten Teilmenge des Lösungsmittels (C) bereitgestellt. Die getrennte Bereitstellung ermöglicht die optimale Kontrolle beziehungsweise Steuerung der Gelierungsreaktion vor und während des Vermischens.

Demgemäß betrifft die vorliegende Erfindung gemäß einer weiteren Ausführungsform ein Verfahren wie zuvor beschrieben, wobei die Komponenten (a1) einerseits und (a2) bis (a4) andererseits getrennt voneinander jeweils in einer Teilmenge des Lösungsmittels (C) bereitgestellt werden.

Besonders bevorzugt wird Komponente (a3) und (a4) als Mischung mit Komponente (a2), d. h. getrennt von Komponente (a1), bereitgestellt. Dies vermeidet die Reaktion von Wasser oder der Komponente (a4) mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

Die in Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Flammschutzmittel, IR-Trübungsmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001.

### Schritt (b)

Erfindungsgemäß erfolgt in Schritt (b) die Umsetzung der Komponenten (a1) bis (a4) in Gegenwart des Lösungsmittels (C) zu einem Gel. Um die Umsetzung durchzuführen, muss zunächst eine homogene Mischung der in Schritt (a) bereitgestellten Komponenten erzeugt werden.

Das Bereitstellen der im Rahmen von Schritt (a) bereitgestellten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100 °C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet. Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben, deren Inhalt hiermit in vollem Umfang einbezogen wird.

### Schritt (c)

Erfindungsgemäß wird in Schritt (c) das im vorigen Schritt erhaltene Gel getrocknet.

Erfindungsgemäß erfolgt die Trocknung unter überkritischen Bedingungen, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren.

Die überkritische Trocknung des Gels erfolgt vorzugsweise in einem Autoklaven. Dabei ist überkritisches CO₂ besonders bevorzugt, d. h. vorzugsweise erfolgt die Trocknung durch Extraktion des Lösungsmittels mit überkritischem CO₂. Der Autoklav kann in einer Ausführungsform zunächst mit einem organischen Lösungsmittel so gefüllt werden, dass das Gel vollständig bedeckt wird, woraufhin der Autoklav verschlossen wird. Dadurch kann verhindert werden, dass Schrumpf des Gels durch Verdampfen des organischen Lösungsmittels auftritt, bevor das Gel in Kontakt mit überkritischem CO₂ kommt.

### Eigenschaften der porösen Materialien und Verwendung

Ein weiterer Gegenstand der vorliegenden Erfindung sind die gemäß dem erfindungsgemäßen Verfahren erhältlichen Aerogele. Somit betrifft die vorliegende Erfindung auch Aerogele erhältlich oder erhalten nach einem Verfahren wie zuvor beschrieben. Die vorliegende Erfindung betrifft auch Aerogele erhältlich oder erhalten nach einem Verfahren zur Herstellung eines Aerogels umfassend die Umsetzung der folgenden Komponenten:
(a1) mindestens ein mehrfunktionelles Isocyanat,
(a2) von 5 bis 20 Gew.-% mindestens ein mehrfunktionelles aromatisches Amin gemäß der allgemeinen Formel I 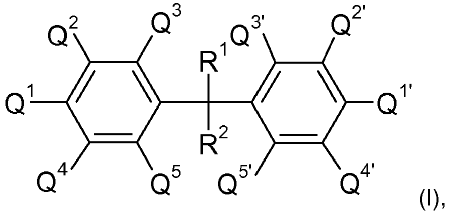 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
   - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, und
   - Q², Q⁴, Q^{2'} und Q^{4'} so gewählt werden, dass das aromatische Amin gemäß der allgemeinen Formel I mindestens eine lineare oder verzweigte Alkylgruppe mit von 1 bis 12 Kohlenstoffatomen, die optional weitere funktionelle Gruppen tragen kann, in alpha-Position zu mindestens einer an den aromatischen Kern gebundenen primären Aminogruppe aufweist,
(a3) von 0 bis 15 Gew.-% Wasser, und
(a4) von 1 bis 4,9 Gew.-% mindestens eines Carboxylats als Katalysator,

jeweils bezogen auf das Gesamtgewicht der Komponenten (a1) bis (a4), wobei sich die Gew.-% der Komponenten (a1) bis (a4) auf 100 Gew.-% addieren, und wobei die Umsetzung in Gegenwart eines Lösungsmittels (C) durchgeführt wird, welches nach der Umsetzung unter überkritischen Bedingungen entfernt wird.

Der mittlere Porendurchmesser wird durch Rasterelektronenmikroskopie und anschließender bildanalytischer Auswertung anhand einer statistisch signifikanten Anzahl an Poren bestimmt. Entsprechende Verfahren sind dem Fachmann bekannt.

Vorzugsweise beträgt der volumengewichtete mittlere Porendurchmesser des Aerogels höchstens 4 Mikrometer. Besonders bevorzugt beträgt der volumengewichtete mittlere Porendurchmesser des porösen Materials höchstens 3 Mikrometer, ganz besonderes bevorzugt höchstens 2 Mikrometer und insbesondere höchstens 1 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles poröses Material zu erhalten, ergibt sich jedoch eine praktische untere Grenze des volumengewichteten mittleren Porendurchmessers. Im Allgemeinen beträgt der volumengewichtete mittlere Porendurchmesser mindestens 50nm, vorzugsweise mindestens 100 nm.

Bevorzugt weist das erfindungsgemäß erhältliche poröse Material eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des porösen Materials aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des porösen Materials nach oben begrenzt.

Die Komponenten (a1) bis (a3) liegen im erfindungsgemäß erhältlichen porösen Material in umgesetzter (polymerer) Form vor. Aufgrund der erfindungsgemäßen Zusammensetzung liegen die Monomerbausteine (a1) und (a2) im porösen Material überwiegend über Harnstoffverknüpfungen und/oder über Isocyanuratverknüpfungen gebunden vor, wobei die Isocyanuratgruppen durch Trimerisierung von Isocyanatgruppen der Monomerbausteine (a1) entstehen. Sofern das poröse Material weitere Komponenten enthält, sind weitere mögliche Verknüpfungen beispielsweise Urethangruppen, welche durch Reaktion von Isocyanatgruppen mit Alkoholen oder Phenolen entstehen.

Die Bestimmung der mol-% der Verknüpfungen der Monomerbausteine im porösen Material erfolgt mittels NMR-Spektroskopie (Kernspinresonanz) im Festkörper oder in gequollenem Zustand. Geeignete Bestimmungsmethoden sind dem Fachmann bekannt.

Die Dichte des erfindungsgemäß erhältlichen porösen Materials beträgt üblicherweise 20 bis 600 g/l, bevorzugt 50 bis 500 g/l und besonders bevorzugt 70 bis 200 g/l.

Das erfindungsgemäße Verfahren ergibt ein zusammenhängendes poröses Material und nicht nur ein Polymerpulver oder -partikel. Dabei wird die räumliche Form des resultierenden porösen Materials durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem porösen Material in Zylinderform getrocknet werden kann.

Die erfindungsgemäßen erhältlichen porösen Materialien weisen eine geringe Wärmeleitfähigkeit, eine hohe Porosität und eine geringe Dichte bei gleichzeitig hoher mechanischer Stabilität auf. Die porösen Materialien weisen zudem eine geringe mittlere Porengröße auf. Die Kombination der vorgenannten Eigenschaften erlaubt den Einsatz als Dämmstoff im Bereich der thermischen Isolation, insbesondere für Anwendungen im belüfteten Zustand als Baumaterialien und in Vakuumisolationspaneelen, insbesondere für Anwendungen im Kühlwesen.

Demgemäß betrifft die vorliegende Erfindung gemäß einem weiteren Aspekt auch die Verwendung eines nach einem wie zuvor beschriebenen Verfahren erhältlichen oder erhaltenen Aerogels als Dämmstoff, insbesondere als Dämmstoff in Bauanwendungen, oder in Vakuumisolationspaneelen.

Die erfindungsgemäß erhältlichen porösen Materialien weisen günstige thermische Eigenschaften einerseits und günstige Materialeigenschaften wie einfache Verarbeitbarkeit und hohe mechanische Stabilität, beispielsweise geringe Brüchigkeit, andererseits auf.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Verfahren zur Herstellung eines Aerogels umfassend die Umsetzung der folgenden Komponenten:
   (a1) mindestens ein mehrfunktionelles Isocyanat,
   (a2) von 5 bis 20 Gew.-% mindestens ein mehrfunktionelles aromatisches Amin gemäß der allgemeinen Formel I 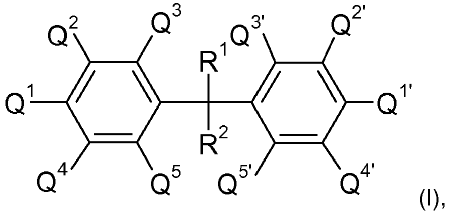 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
      - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, und
      - Q², Q⁴, Q^{2'} und Q^{4'} so gewählt werden, dass das aromatische Amin gemäß der allgemeinen Formel I mindestens eine lineare oder verzweigte Alkylgruppe mit von 1 bis 12 Kohlenstoffatomen, die optional weitere funktionelle Gruppen tragen kann, in alpha-Position zu mindestens einer an den aromatischen Kern gebundenen primären Aminogruppe aufweist,
   (a3) von 0 bis 15 Gew.-% Wasser, und
   (a4) von 1 bis 4,9 Gew.-% mindestens eines Carboxylats als Katalysator,
   jeweils bezogen auf das Gesamtgewicht der Komponenten (a1) bis (a4), wobei sich die Gew.-% der Komponenten (a1) bis (a4) auf 100 Gew.-% addieren, und wobei die Umsetzung in Gegenwart eines Lösungsmittels (C) durchgeführt wird, welches nach der Umsetzung unter überkritischen Bedingungen entfernt wird.
2. Verfahren nach Ausführungsform 1, wobei mindestens 10 und höchstens 20 Gew.-% der Komponente (a2) bezogen auf das Gesamtgewicht der Komponenten (a1) bis (a4) eingesetzt wird.
3. Verfahren nach Ausführungsform 1 oder 2, wobei mindestens 12 und höchstens 18 Gew.-% der Komponente (a2) bezogen auf das Gesamtgewicht der Komponenten (a1) bis (a4) eingesetzt wird.
4. Verfahren nach einer oder mehreren der Ausführungsformen 1 bis 3, wobei die Aminkomponente (a2) mindestens eine Verbindung umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.
5. Verfahren nach einer oder mehreren der Ausführungsformen 1 bis 4, wobei die Alkylgruppen der mehrfunktionellen aromatischen Amine (a2) gemäß der allgemeinen Formel I ausgewählt werden aus Methyl, Ethyl, n-Propyl, iso-Propyl, n-Butyl, sek-Butyl und tert-Butyl.
6. Verfahren nach einer oder mehreren der Ausführungsformen 1 bis 5, wobei die mehrfunktionellen aromatischen Amine (a2) gemäß der allgemeinen Formel I 3,3',5,5'-Tetraalkyl-4,4'-diaminodiphenylmethane sind,
7. Verfahren nach einer oder mehreren der Ausführungsformen 1 bis 6, wobei die mehrfunktionellen aromatischen Amine (a2) gemäß der allgemeinen Formel I ausgewählt werden aus 3,3',5,5'-Tetraethyl-4,4'-diaminodiphenylmethan und/oder 3,3',5,5'-Tetramethyl-4,4'-diaminodiphenylmethan.
8. Verfahren nach einer oder mehreren der Ausführungsformen 1 bis 7, wobei Komponente (a4) ausgewählt wird aus der Gruppe bestehend aus Alkalimetallcarboxylaten, Erdalkalimetallcarboxylaten und Ammoniumcarboxylaten.
9. Verfahren nach einer oder mehreren der Ausführungsformen 1 bis 8, wobei Komponente (a4) Kalium-2-ethylhexanoat umfasst.
10. Verfahren nach einer oder mehreren der Ausführungsformen 1 bis 9, wobei kein Wasser verwendet wird.
11. Verfahren nach einer oder mehreren der Ausführungsformen 1 bis 10, wobei mindestens 0,1 Gew.-% Wasser zugegeben wird.
12. Verfahren nach einer oder mehreren der Ausführungsformen 1 bis 11, umfassend:
   (a) Bereitstellen der Komponenten (a1), (a2), (a4) und gegebenenfalls (a3) sowie des Lösungsmittels (C) wie in den Ausführungsformen 1 bis 11 definiert,
   (b) Umsetzung der Komponenten (a1) bis (a4) in Gegenwart des Lösungsmittels (C) zu einem Gel, und
   (c) Trocknen des im vorigen Schritt erhaltenen Gels unter überkritischen Bedingungen.
13. Verfahren nach Ausführungsform 12, wobei die Komponenten (a1) einerseits und (a2) bis (a4) andererseits getrennt voneinander jeweils in einer Teilmenge des Lösungsmittels (C) bereitgestellt werden.
14. Aerogele erhältlich gemäß dem Verfahren nach einer oder mehreren der Ausführungsformen 1 bis 13.
15. Verwendung von Aerogelen gemäß Ausführungsform 14 als Dämmstoff.
16. Verwendung von Aerogelen gemäß Ausführungsform 14 als Dämmstoff in Bauanwendungen oder in Vakuumisolationspaneelen.

Die Erfindung soll an den nachfolgenden Beispielen näher erläutert werden.

### Beispiele

Die thermische Leitfähigkeit λ wurde nach DIN EN 12667 mit einem Plattengerät der Firma Hesto (Lambda Control A50) bestimmt.

### 1. Es wurden folgende Verbindungen eingesetzt:

### 1.1 Komponente a1:

Oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25 °C nach DIN 53018 (nachfolgend "Verbindung M200").

### 1.2 Komponente a2:

3,3',5,5'-Tetraethyl-4,4'-diaminodiphenylmethan (nachfolgend "MDEA") und 2,2'-Dichloro-3,3',5,5'-tetraethyl-4,4'-diaminodiphenylmethan (nachfolgend als "Chlor-MDEA" bezeichnet).

### 1.3 Katalysatoren a4:

Dabco® K15 von Air Products and Chemicals, Inc. (eine 85 Gew.-%ige Lösung von Kalium-2-ethylhexanoat in Diethylenglykol, d. h. 4 g Dabco® K15 entsprechen 3,4 g Kalium-2-ethylhexanoat).

### 2.1 Beispiel 1

56 g der Verbindung M200 wurden unter Rühren bei 20 °C in 220 g 2-Butanon in einem Becherglas gelöst. 12 g der Verbindung MDEA und 4 g Dabco®K15 sowie 4 g Wasser wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde wie nachfolgend beschrieben das Gel aus dem Becherglas genommen und in einem Autoklaven durch Lösungsmittel-Extraktion mit überkritischem CO₂ getrocknet.

Der Gel-Monolith wurde aus dem Becherglas entnommen und in einen 250 ml Autoklaven transferiert und anschließend verschlossen. Der Monolith wurde für 24h im CO₂-Strom getrocknet. Der Druck (im Trocknungssystem) betrug zwischen 115 - 120 bar, die Temperatur betrug 40 °C. Am Ende wurde der Druck im System innerhalb von ca. 45 Minuten bei einer Temperatur von 40 °C kontrolliert auf Atmosphärendruck verringert. Der Autoklav wurde geöffnet und der getrocknete Monolith wurde entnommen.

Die Wärmeleitfähigkeit des so erhaltenen Aerogels betrug 18 mW/m*K bei 10 °C.

### 2.2 Beispiel 2

56 g der Verbindung M200 wurden unter Rühren bei 20 °C in 220 g 2-Butanon in einem Becherglas gelöst. 12 g der Verbindung MDEA und 4 g Dabco® K15 wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde entsprechend Beispiel 1 das Gel aus dem Becherglas genommen und in einem Autoklaven durch Lösungsmittel-Extraktion mit überkritischem CO₂ getrocknet.

Die Wärmeleitfähigkeit des so erhaltenen Aerogels betrug 18,5 mW/m*K bei 10 °C.

### 2.3 Beispiel 3 (Vergleichsbeispiel)

56 g der Verbindung M200 wurden unter Rühren bei 20 °C in 220 g 2-Butanon in einem Becherglas gelöst. 30 g der Verbindung MDEA und 4 g Dabco® K15 wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde entsprechend Beispiel 1 das Gel aus dem Becherglas genommen und in einem Autoklaven durch Lösungsmittel-Extraktion mit überkritischem CO₂ getrocknet. Die Wärmeleitfähigkeit des so erhaltenen Aerogels betrug 19,6 mW/m*K bei 10 °C.

### 2.4 Beispiel 4 (Vergleichsbeispiel)

36 g der Verbindung M200 wurden unter Rühren bei 20 °C in 220 g 2-Butanon in einem Becherglas gelöst. 32 g der Verbindung MDEA und 4 g Dabco® K15 wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde entsprechend Beispiel 1 das Gel aus dem Becherglas genommen und in einem Autoklaven durch Lösungsmittel-Extraktion mit überkritischem CO₂ getrocknet. Die Wärmeleitfähigkeit des so erhaltenen Aerogels betrug 23,2 mW/m*K bei 10 °C.

### 2.5 Beispiel 5 (Vergleichsbeispiel)

56 g der Verbindung M200 wurden unter Rühren bei 20 °C in 220 g 2-Butanon in einem Becherglas gelöst. 12 g der Verbindung Chlor-MDEA und 4 g Dabco® K15 sowie 4 g Wasser wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde entsprechend Beispiel 1 das Gel aus dem Becherglas genommen und in einem Autoklaven durch Lösungsmittel-Extraktion mit überkritischem CO₂ getrocknet.

Die Wärmeleitfähigkeit des so erhaltenen Aerogels betrug 25,8 mW/m*K bei 10 °C.

### 2.6 Beispiel 6 (erfindungsgemäß)

48 g der Verbindung M200 wurden unter Rühren bei 20 °C in 220 g 2-Butanon in einem Becherglas gelöst. 12 g der Verbindung MDEA, 2 g Dabco K15 und 4g Wasser wurden in 220 g 2-Butanon in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde entsprechend Beispiel 1 das Gel aus dem Becherglas genommen und in einem Autoklaven durch Lösungsmittel-Extraktion mit überkritischem CO₂ getrocknet.

Die Wärmeleitfähigkeit des so erhaltenen Aerogels betrug 18,2 mW/m*K bei 10 °C.

## Patentansprüche

1. Verfahren zur Herstellung eines Aerogels umfassend die Umsetzung der folgenden Komponenten:
(a1) mindestens ein mehrfunktionelles Isocyanat,
(a2) von 5 bis 20 Gew.-% mindestens ein mehrfunktionelles aromatisches Amin gemäß der allgemeinen Formel I 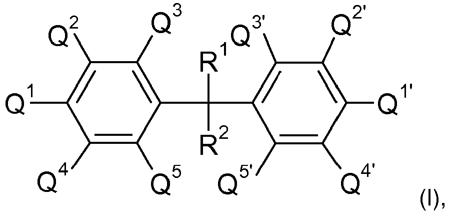 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, und
- Q², Q⁴, Q^{2'} und Q^{4'} so gewählt werden, dass das aromatische Amin gemäß der allgemeinen Formel I mindestens eine lineare oder verzweigte Alkylgruppe mit von 1 bis 12 Kohlenstoffatomen, die optional weitere funktionelle Gruppen tragen kann, in alpha-Position zu mindestens einer an den aromatischen Kern gebundenen primären Aminogruppe aufweist,
(a3) von 0 bis 15 Gew.-% Wasser, und
(a4) von 1 bis 4,9 Gew.-% mindestens eines Carboxylats als Katalysator,
jeweils bezogen auf das Gesamtgewicht der Komponenten (a1) bis (a4), wobei sich die Gew.-% der Komponenten (a1) bis (a4) auf 100 Gew.-% addieren, und wobei die Umsetzung in Gegenwart eines Lösungsmittels (C) durchgeführt wird, welches nach der Umsetzung unter überkritischen Bedingungen entfernt wird,
wobei bei der Umsetzung ein Gel erhalten wird, das anschließend getrocknet wird.

2. Verfahren nach Anspruch 1, wobei mindestens 10 und höchstens 20 Gew.-% der Komponente (a2) bezogen auf das Gesamtgewicht der Komponenten (a1) bis (a4) eingesetzt werden.

3. Verfahren nach Anspruch 1 oder 2, wobei mindestens 12 und höchstens 18 Gew.-% der Komponente (a2) bezogen auf das Gesamtgewicht der Komponenten (a1) bis (a4) eingesetzt werden.

4. Verfahren nach einem der Ansprüche 1 bis 3, wobei die Komponente (a2) mindestens eine Verbindung umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.

5. Verfahren nach einem der Ansprüche 1 bis 4, wobei die Alkylgruppen des mindestens einen mehrfunktionellen aromatischen Amins (a2) gemäß der allgemeinen Formel I ausgewählt werden aus Methyl, Ethyl, n-Propyl, iso-Propyl, n-Butyl, sek-Butyl und tert-Butyl.

6. Verfahren nach einem der Ansprüche 1 bis 5, wobei das mindestens eine mehrfunktionelle aromatische Amin (a2) gemäß der allgemeinen Formel I ausgewählt ist aus 3,3',5,5'-Tetraalkyl-4,4'-diaminodiphenylmethanen.

7. Verfahren nach einem der Ansprüche 1 bis 6, wobei das mindestens eine mehrfunktionelle aromatische Amin (a2) gemäß der allgemeinen Formel I ausgewählt werden aus 3,3',5,5'-Tetraethyl-4,4'-diaminodiphenylmethan und/oder 3,3',5,5'-Tetramethyl-4,4'-diaminodiphenylmethan.

8. Verfahren nach einem der Ansprüche 1 bis 7, wobei Komponente (a4) ausgewählt wird aus der Gruppe bestehend aus Alkalimetallcarboxylaten, Erdalkalimetallcarboxylaten und Ammoniumcarboxylaten.

9. Verfahren nach einem der Ansprüche 1 bis 8, wobei Komponente (a4) Kalium-2-ethylhexanoat umfasst.

10. Verfahren nach einem der Ansprüche 1 bis 9, wobei kein Wasser verwendet wird.

11. Verfahren nach einem oder mehreren der Ansprüche 1 bis 10, wobei mindestens 0,1 Gew.-% Wasser zugegeben wird.

12. Verfahren nach einem oder mehreren der Ansprüche 1 bis 11, umfassend die Schritte:
(a) Bereitstellen der Komponenten (a1), (a2), (a4) und gegebenenfalls (a3) sowie des Lösungsmittels (C) wie in den Ansprüchen 1 bis 11 definiert,
(b) Umsetzung der Komponenten (a1) bis (a4) in Gegenwart des Lösungsmittels (C) zu einem Gel, und
(c) Trocknen des im vorigen Schritt erhaltenen Gels unter überkritischen Bedingungen.

13. Verfahren nach Anspruch 12, wobei die Komponenten (a1) einerseits und (a2) bis (a4) andererseits getrennt voneinander jeweils in einer Teilmenge des Lösungsmittels (C) bereitgestellt werden.

14. Aerogele erhältlich oder erhalten gemäß dem Verfahren nach einem der Ansprüche 1 bis 13.

15. Verwendung von Aerogelen gemäß Anspruch 14 als Dämmstoff im Bereich der thermischen Isolation.

16. Verwendung von Aerogelen gemäß Anspruch 14 als Dämmstoff in Bauanwendungen oder in Vakuumisolationspaneelen.

## Claims

1. A process for producing an aerogel which comprises reacting the following components:
(a1) at least one polyfunctional isocyanate,
(a2) from 5 to 20% by weight of at least one polyfunctional aromatic amine
having the general formula I 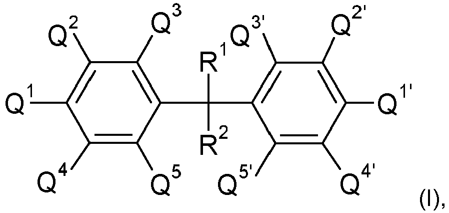
where R¹ and R² can be identical or different and are each selected independently from among hydrogen and linear or branched alkyl groups having from 1 to 6 carbon atoms and where all substituents Q¹ to Q⁵ and Q^{1'} to Q^{5'} are identical or different and are each selected independently from among hydrogen, a primary amino group and a linear or branched alkyl group having from 1 to 12 carbon atoms, where the alkyl group can bear further functional groups, with the proviso that
- the compound having the general formula I comprises at least two primary amino groups, where at least one of Q¹, Q³ and Q⁵ is a primary amino group and at least one of Q^{1'}, Q^{3'} and Q^{5'} is a primary amino group, and
- Q², Q⁴, Q^{2'} and Q^{4'} are selected so that the aromatic amine having the general formula I has at least one linear or branched alkyl group having from 1 to 12 carbon atoms, which may optionally bear further functional groups, in the alpha position relative to at least one primary amino group bound to the aromatic ring,
(a3) from 0 to 15% by weight of water, and
(a4) from 1 to 4.9% by weight of at least one carboxylate as catalyst,
in each case based on the total weight of the components (a1) to (a4), where the % by weight of the components (a1) to (a4) add up to 100% by weight, and where the reaction is carried out in the presence of a solvent (C) which is removed under supercritical conditions after the reaction,
where a gel is obtained in the reaction, which gel is subsequently dried.

2. The process according to claim 1, wherein at least 10 and not more than 20% by weight of the component (a2), based on the total weight of the components (a1) to (a4), are used.

3. The process according to claim 1 or 2, wherein at least 12 and not more than 18% by weight of the component (a2), based on the total weight of the components (a1) to (a4), are used.

4. The process according to one of claims 1 to 3, wherein the component (a2) comprises at least one compound selected from the group consisting of 3,3',5,5'-tetraalkyl-4,4'-diaminodiphenylmethane, 3,3',5,5'-tetraalkyl-2,2'-diaminodiphenylmethane and 3,3',5,5'-tetraalkyl-2,4'-diaminodiphenylmethane, where the alkyl groups in the 3,3',5 and 5' positions can be identical or different and are each selected independently from among linear or branched alkyl groups having from 1 to 12 carbon atoms, where the alkyl groups may bear further functional groups.

5. The process according to one of claims 1 to 4, wherein the alkyl groups of the at least one polyfunctional aromatic amine (a2) having the general formula I are selected from among methyl, ethyl, n-propyl, isopropyl, n-butyl, sec-butyl and tert-butyl.

6. The process according to one of claims 1 to 5, wherein the at least one polyfunctional aromatic amine (a2) having the general formula I is selected from among 3,3',5,5'-tetraalkyl-4,4'-diaminodiphenylmethanes.

7. The process according to one of claims 1 to 6, wherein the at least one polyfunctional aromatic amine (a2) having the general formula I are selected from among 3,3',5,5'-tetraethyl-4,4'-diaminodiphenylmethane and 3,3',5,5'-tetramethyl-4,4'-diaminodiphenylmethane.

8. The process according to one of claims 1 to 7, wherein component (a4) is selected from the group consisting of alkali metal carboxylates, alkaline earth metal carboxylates and ammonium carboxylates.

9. The process according to one of claims 1 to 8, wherein component (a4) comprises potassium 2-ethylhexanoate.

10. The process according to one of claims 1 to 9, wherein no water is used.

11. The process according to one or more of claims 1 to 10, wherein at least 0.1 % by weight of water is added.

12. The process according to one or more of claims 1 to 11, which comprises the steps:
(a) provision of the components (a1), (a2), (a4) and optionally (a3) and of the solvent (C) as defined in claims 1 to 11,
(b) reaction of the components (a1) to (a4) in the presence of the solvent (C) to form a gel, and
(c) drying under supercritical conditions of the gel obtained in the preceding step.

13. The process according to claim 12, wherein the components (a1) and also (a2) to (a4) are provided separately from one another in each case in a partial amount of the solvent (C).

14. An aerogel which can be obtained or has been obtained by the process according to one of claims 1 to 13.

15. The use of aerogels according to claim 14 as insulation material within the field of thermal insulation.

16. The use of aerogels according to claim 14 as insulation material in building applications or in vacuum insulation panels.

## Revendications

1. Procédé de fabrication d'un aérogel comprenant la réaction des composants suivants :
(a1) au moins un isocyanate polyfonctionnel,
(a2) de 5 à 20 % en poids d'au moins une amine aromatique polyfonctionnelle selon la Formule générale I 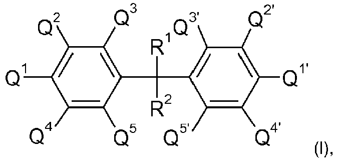
dans laquelle R¹ et R² peuvent être identiques ou différents et sont indépendamment l'un de l'autre choisis parmi un hydrogène et des groupes alkyle linéaires ou ramifiés ayant de 1 à 6 atomes de carbone, et
la totalité des substituants Q¹ à Q⁵ et Q^{1'} à Q^{5'} étant identiques ou
différents et étant indépendamment les uns des autres choisis parmi un hydrogène, un groupe amino primaire ou un groupe alkyle linéaire ou
ramifié ayant 1 à 12 atomes de carbone, le groupe alkyle pouvant porter d'autres groupes fonctionnels, à la condition que
- le composé selon la Formule générale I comprenne au moins deux groupes amino primaires, au moins l'un parmi Q¹, Q³ et Q⁵ étant un groupe amino primaire et au moins l'un parmi Q^{1'}, Q^{3'}et Q^{5'} étant un groupe amino primaire, et
- Q², Q⁴, Q^{2'} et Q^{4'} soient choisis de façon que l'amine aromatique selon la Formule générale I présente au moins un groupe alkyle linéaire ou ramifié ayant 1 à 12 atomes de carbone, qui éventuellement peut porter d'autres groupes fonctionnels, en position alpha par rapport à au moins un groupe amino primaire lié au noyau aromatique,
(a3) de 0 à 15 % en poids d'eau, et
(a4) de 1 à 4,9 % en poids d'au moins un carboxylate en tant que catalyseur, chacun par rapport au poids total des composants (a1) à (a4), la somme des pourcentages en poids des composants (a1) à (a4) faisant 100 % en poids, et la réaction étant mise en œuvre en présence d'un solvant (C), qui est éliminé après la réaction dans des conditions supercritiques,
la réaction permettant d'obtenir un gel, qui est ensuite séché.

2. Procédé selon la revendication 1, dans lequel on utilise au moins 10 et au plus 20 % en poids du composant (a2) par rapport au poids total des composants (a1) à (a4).

3. Procédé selon la revendication 1 ou 2, dans lequel on utilise au moins 12 et au plus 18 % en poids du composant (a2) par rapport au poids total des composants (a1) à (a4).

4. Procédé selon l'une des revendications 1 à 3, dans lequel le composant (a2) comprend au moins un composé qui est choisi dans le groupe consistant en le 3,3',5,5'-tétraalkyl-4,4'-diaminodiphénylméthane, le 3,3',5,5'-tétraalkyl-2,2'-diaminodiphénylméthane et le 3,3',5,5'-tétraalkyl-2,4'-diaminodiphénylméthane, les groupes alkyle sur les positions 3, 3', 5 et 5'pouvant être identiques ou différents, et étant indépendamment les uns des autres choisis parmi les groupes alkyle linéaires ou ramifiés ayant 1 à 12 atomes de carbone, les groupes alkyle pouvant porter d'autres groupes fonctionnels.

5. Procédé selon l'une des revendications 1 à 4, dans lequel les groupes alkyle de l'au moins une amine aromatique polyfonctionnelle (a2) selon la Formule générale I sont choisis parmi un méthyle, un éthyle, un n-propyle, un isopropyle, un n-butyle, un sec-butyle et un tert-butyle.

6. Procédé selon l'une des revendications 1 à 5, dans lequel l'au moins une amine aromatique multifonctionnelle (a2) selon la Formule générale I est choisie parmi les 3,3',5,5'-tétraalkyl-4,4'-diaminodiphénylméthanes.

7. Procédé selon l'une des revendications 1 à 6, dans lequel l'au moins une amine aromatique polyfonctionnelle (a2) selon la Formule générale I est choisie parmi le 3,3',5,5'-tétraéthyl-4,4'-diaminodiphénylméthane et/ou le 3,3',5,5'-tétraméthyl-4,4'-diaminodiphénylméthane.

8. Procédé selon l'une des revendications 1 à 7, dans lequel le composant (a4) est choisi dans le groupe consistant en les carboxylates de métaux alcalins, les carboxylates de métaux alcalino-terreux et la carbonate d'ammonium.

9. Procédé selon l'une des revendications 1 à 8, dans lequel le composant (a4) comprend le 2-éthylhexanoate de potassium.

10. Procédé selon l'une des revendications 1 à 9, dans lequel on n'utilise pas d'eau.

11. Procédé selon l'une ou plusieurs des revendications 1 à 10, dans lequel on ajoute au moins 0,1 % en poids d'eau.

12. Procédé selon l'une ou plusieurs des revendications 1 à 11, comprenant les étapes :
(a) fourniture des composants (a1), (a2), (a4) et éventuellement (a3), ainsi que du solvant (C), tels que définis dans les revendications 1 à 11,
(b) réaction des composants (a1) à (a4) en présence du solvant (C) pour donner un gel, et
(c) séchage du gel obtenu dans l'étape précédente dans des conditions supercritiques.

13. Procédé selon la revendication 12, dans lequel les composants (a1) d'une part, et (a2) à (a4) d'autre part, sont fournis séparément l'un de l'autre, dans une quantité partielle du solvant (C).

14. Aérogels pouvant être obtenus, ou obtenus par le procédé selon l'une des revendications 1 à 13.

15. Utilisation d'aérogels selon la revendication 14 en tant que matériaux isolants dans le domaine de l'isolation thermique.

16. Utilisation d'aérogels selon la revendication 14 en tant que matériaux isolants dans des applications de construction ou dans des panneaux d'isolation sous vide.
